# EUROPÄISCHE PATENTSCHRIFT

(11) **EP 3 152 003 B1**
(45) Veröffentlichungstag und Bekanntmachung des Hinweises auf die Patenterteilung: **18.04.2018**
(21) Anmeldenummer: 15736783.0
(22) Anmeldetag: 30.05.2015
(51) Int. Cl.: B25B 27/10, B21D 39/04, B21D 41/02

(54) **WERKZEUGVORRICHTUNG ZUM ANSCHLUSS EINES KUNSTOFFROHRES AN EINEN FITTING**
TOOL DEVICE FOR CONNECTING A PLASTIC TUBE TO A FITTING
DISPOSITIF FORMANT OUTIL SERVANT À RACCORDER UN TUYAU EN MATIÈRE PLASTIQUE À UN RACCORD

(30) Priorität: 03.06.2014 DE 102014107752
(43) Veröffentlichungstag der Anmeldung: 12.04.2017
(73) Patentinhaber: Rehau AG & Co, 95111 Rehau (DE)
(72) Erfinder: CHRISTOPH, Sven, 91085 Weisendorf (DE); SAPPER, Richard, 91126 Schwabach (DE); BONHAG, Ehrenfried, 91126 Schwabach (DE); WOLTER, Daniel, 88525 Dürmentingen (DE)
(86) Internationale Anmeldenummer: PCT/EP2015/001101
(87) Internationale Veröffentlichungsnummer: WO 2015/185201

(56) Entgegenhaltungen:
- DE-U1-202012 104 763
- US-A1- 2003 204 943

## Beschreibung

Die vorliegende Erfindung betrifft eine Werkzeugvorrichtung zum Anschluss eines Kunststoffrohres oder eines Metall-Kunststoff-Verbundrohres an einen Fitting mit einer Schiebe- oder Presshülse, die ein Gehäuse, eine Aufweitvorrichtung zum Aufweiten der Enden des Kunststoffrohres oder des Metall-Kunststoff-Verbundrohres, eine Schiebevorrichtung zum Aufschieben der Schiebehülse oder eine Pressvorrichtung zum Aufpressen der Presshülse sowie ein maschinell betreibbares Antriebselement, das umschaltbar zum Antrieb der Aufweitvorrichtung oder zum der Schiebe- oder Pressvorrichtung betätigbar ist, umfasst, wobei die Aufweitvorrichtung und die Schiebe- oder Pressvorrichtung mit dem Gehäuse verbunden und zumindest teilweise in dem Gehäuse aufgenommen sind.

Eine derartige Werkzeugvorrichtung ist aus der DE 10 2008 051 284 B3 bekannt. In der darin beschriebenen Vorrichtung weist das Antriebselement lediglich einen Arbeitskolben auf, der über eine als Umschaltventil ausgebildete Umschaltvorrichtung wahlweise in zwei einander diametral gegenüberliegende Bewegungsrichtungen zum Antrieb einer Aufweitvorrichtung einerseits oder eine Schiebe- oder Pressvorrichtung andererseits bewegt werden kann. Diese Werkzeugvorrichtung hat jedoch den Nachteil, dass die Umschaltvorrichtung ein Bedienelement, wie einen Schalter, einen Drehknopf oder ähnliches, an der Werkzeugvorrichtung erforderlich macht, das beispielsweise durch Umfallen der Werkzeugvorrichtung eine zufällige Fehlbedienung auslösen

Aus der DE 20 2012 104 763 U1 ist eine Werkzeugvorrichtung gemäß dem Oberbegriff von Anspruch 1 bekannt.

Dementsprechend liegt die Aufgabe der vorliegenden Erfindung in der Bereitstellung einer Werkzeugvorrichtung zum Anschluss eines Kunststoffrohres oder eines Metall-Kunststoff-Verbundrohres an einen Fitting mit einer Schiebe- oder Presshülse, die die Nachteile des Stands der Technik überwindet. Insbesondere soll die erfindungsgemäße Werkzeugvorrichtung für eine zufällige Fehlbedienung nicht anfällig sein und für den Installateur intuitiv bedienbar sein. Darüber hinaus liegt die vorliegende Erfindung in der Verwendung einer derartigen Werkzeugvorrichtung zum Anschluss eines Kunststoffrohres oder eines Metall-Kunststoff-Verbundrohres an einen Fitting mit einer Schiebe- oder Presshülse.

Diese und andere Aufgaben werden durch eine Werkzeugvorrichtung gemäß Anspruch 1 bzw. durch die Verwendung gemäß Anspruch 10 gelöst. Bevorzugte Ausführungsformen der Werkzeugvorrichtung der vorliegenden Erfindung sind in den abhängigen Ansprüchen beschrieben.

Gemäß der vorliegenden Erfindung wurde erkannt, dass eine Umstellung zwischen den beiden Betriebsarten der Werkzeugvorrichtung für den Installateur am einfachsten durchführbar ist, wenn diese Umstellung direkt durch Drehen der Werkzeugvorrichtung selbst erfolgt. Für den Installateur ist dann intuitiv erkennbar, in welcher Betriebsart sich die Werkzeugvorrichtung gerade befindet, da die gerade angesteuerte Vorrichtung, also entweder die Aufweitvorrichtung einerseits oder eine Schiebe- oder Pressvorrichtung andererseits in eine bestimmte Richtung relativ zum Antriebselement zeigt. Dies gilt auch dann, wenn zufällig zwischen den Betriebsarten umgestellt wurde (beispielsweise bei einem Umfallen der Werkzeugvorrichtung), so dass eine zufällige Fehlbedienung unwahrscheinlich ist, die Umstellung der Betriebsart vom Installateur leicht erkannt werden kann.

Dementsprechend liegt die vorliegend Erfindung in der Bereitstellung einer zum Anschluss eines Kunststoffrohres oder eines Metall-Kunststoff-Verbundrohres an einen Fitting mit einer Schiebe- oder Presshülse, wobei die erfindungsgemäße Werkzeugvorrichtung ein Gehäuse; eine Aufweitvorrichtung zum Aufweiten der Enden des Kunststoffrohres oder des Metall-Kunststoff-Verbundrohres; eine Schiebevorrichtung zum Aufschieben der Schiebehülse oder eine Pressvorrichtung zum Aufpressen der Presshülse; und ein maschinell betreibbares Antriebselement, das umschaltbar zum Antrieb der Aufweitvorrichtung oder zum Antrieb der Schiebe- oder Pressvorrichtung betätigbar ist, wobei die Aufweitvorrichtung und die Schiebe- oder Pressvorrichtung mit dem Gehäuse verbunden und zumindest teilweise in dem Gehäuse aufgenommen sind. Erfindungsgemäß ist die Werkzeugvorrichtung dadurch gekennzeichnet, dass ein Umschalten des Antriebselement zwischen dem Antrieb der Aufweitvorrichtung und dem Antrieb der Schiebe- oder Pressvorrichtung durch Drehen des Gehäuses relativ zum Antriebselement bewirkbar ist. Darüber hinaus liegt die vorliegende Erfindung in der Verwendung einer erfindungsgemäßen Werkzeugvorrichtung nach einem der vorhergehenden Ansprüche zum Anschluss eines Kunststoffrohres oder eines Metall-Kunststoff-Verbundrohres an einen Fitting mit einer Schiebe- oder Presshülse.

Wie hierin verwendet bezeichnet der Begriff "maschinell betreibbares Antriebselement" bzw. "Antriebselement" ein Element, durch das der eigentlichen Antrieb (z. B. einer Hydraulikpumpe oder dgl.) an der erfindungsgemäßen Werkzeugvorrichtung befestigt wird und durch das eine Wirkverbindung zwischen der Aufweitvorrichtung oder der Schiebe- oder Pressvorrichtung einerseits und dem eigentlichen Antrieb gewährleistet wird.

Hinsichtlich der erfindungsgemäßen Werkzeugvorrichtung kann es sich als hilfreich erweisen, wenn die Aufweitvorrichtung eine erste Kolben-Zylindereinheit mit einem ersten Arbeitskolben, der über ein erstes Ventil ansteuerbar ist, umfasst und die Schiebe- oder Pressvorrichtung eine zweite Kolben-Zylindereinheit mit einem zweiten Arbeitskolben, der über ein zweites Ventil ansteuerbar ist, umfasst. Eine derartige Ausgestaltung mit zwei getrennten Kolben-Zylindereinheiten ermöglicht eine kompakte Bauform der erfindungsgemäßen Werkzeugvorrichtung und eine einfache und effektive Möglichkeit, die Aufweitvorrichtung und die Schiebe- oder Pressvorrichtung getrennt voneinander ansteuerbar zu machen. Darüber hinaus muss im Falle einer derartigen Ausgestaltung bei einem Wechsel der Betriebsart der Werkzeugvorrichtung der jeweilige Kolben zunächst nicht erst in seine Ausgangsstellung zurückgefahren werden. Es muss also nicht mehr der gesamte Verfahrweg der Werkzeugvorichtung durchlaufen werden. Dadurch wird signifikant Zeit beim Anschließen eines Rohrendes an einen Fitting eingespart.

Dabei hat es sich als besonders günstig erwiesen, wenn in einer ersten Drehstellung des Gehäuses relativ zum Antriebselement das erste Ventil geöffnet und das zweite Ventil geschlossen ist und in einer zweiten Drehstellung des Gehäuses relativ zum Antriebselement das erste Ventil geschlossen und das zweite Ventil geöffnet ist. In diesem Zusammenhang ist es besonders bevorzugt, wenn das Öffnen und Schließen des ersten Ventils und des zweiten Ventils über eine gemeinsame Welle erfolgt, die vorzugsweise als Exzenterwelle ausgebildet ist. In einer ganz besonders bevorzugten Ausführungsform der vorliegenden Erfindung bleibt die gemeinsame Welle, die auch hier bevorzugt als Exzenterwelle ausgebildet ist, bei dem Drehen des Gehäuses relativ zum Antriebselement positionsstabil.

Es hat sich aus als günstig erwiesen, wenn eine erste Kolbenachse der ersten Kolben-Zylindereinheit parallel zu einer zweiten Kolbenachse der zweiten Kolben-Zylindereinheit verläuft und die Aufweitvorrichtung und die Schiebe- oder Pressvorrichtung nebeneinander und gegeneinander verschoben angeordnet sind. Dadurch wird eine kompaktere Bauform der erfindungsgemäßen Werkzeugvorrichtung erreicht, so dass die erfindungsgemäße Werkzeugvorrichtung wenig Raum benötigt, um eingesetzt werden zu können.

Weiter kann es von Vorteil sein, wenn die beiden Kolben-Zylindereinheiten unterschiedliche Zylinderdurchmesser aufweisen. Dadurch kann der Kraftaufwand, der zum Betrieb der Aufweitvorrichtung einerseits und der Schiebevorrichtung oder der Pressvorrichtung andererseits erforderlich ist, durch die Wahl der Zylinderdurchmesser der jeweiligen Kolben-Zylindereinheit spezifisch eingestellt werden. Dabei hat es sich in der Praxis als besonders günstig erwiesen, wenn die Kolben-Zylindereinheit der Aufweitvorrichtung einen geringeren Zylinderdurchmesser als die Kolben-Zylindereinheit der Schiebevorrichtung bzw. der Pressvorrichtung aufweist.

Die Bewegung des Antriebselements kann dabei bevorzugt translatorisch oder rotatorisch erfolgen. Das Antriebselement wird vorzugsweise translatorisch und maschinell betrieben. Dabei erfolgt die maschinelle Bewegung des Antriebselements vorzugsweise hydraulisch. Die dazu erforderliche Hydraulikvorrichtung ist mit der erfindungsgemäßen Werkzeugvorrichtung verbindbar, beispielsweise durch Aufschrauben oder Aufrasten. In einer ersten Drehstellung des Gehäuses relativ zum Antriebselement wird der durch die Hydraulikvorrichtung bewirkte Antrieb zum Betrieb der Kolben-Zylindereinheit der Aufweitvorrichtung genutzt. Dabei wird der Kolben dieser Kolben-Zylindereinheit zum Aufweiten eines Endes des Kunststoffrohres oder des Metall-Kunststoff-Verbundrohres genutzt. In einer zweiten Drehstellung des Gehäuses relativ zum Antriebselement wird der durch die Hydraulikvorrichtung bewirkte Antrieb zum Betrieb der Kolben-Zylindereinheit der Schiebevorrichtung bzw. der Pressvorrichtung genutzt.

Darüber hinaus liegt die vorliegende Erfindung in der Verwendung der erfindungsgemäßen Werkzeugvorrichtung zum Anschluss eines Kunststoffrohres oder eines Metall-Kunststoff-Verbundrohres an einen Fitting mit einer Schiebe- oder Presshülse.

Im Folgenden soll die vorliegende Erfindung unter Bezugnahme auf die in den Figuren dargestellte Ausführungsform im Detail erläutert werden. Dabei wird die vorliegende Erfindung unter Bezugnahme auf eine erfindungsgemäße Werkzeugvorrichtung zum Rohranschluss an einen Fitting mit einer Schiebehülse im Detail erläutert. Es versteht sich jedoch, dass die vorliegende Erfindung gleichermaßen auch für die Verwendung einer Werkzeugvorrichtung zum Anschluss eines Rohres an einen Fitting mit einer Presshülse unter Einsatz einer entsprechenden Pressvorrichtung geeignet ist.
Fig. 1 zeigt eine Seitenansicht einer Werkzeugvorrichtung gemäß einer Ausführungsform der vorliegenden Erfindung mit einem Verpressjoch.
Fig. 2 zeigt eine Schnittdarstellung der in Fig. 1 gezeigten Werkzeugvorrichtung entlang der Linie A-A in Fig. 1 mit Blick in Pfeilrichtung.
Fig. 3 zeigt eine Schnittdarstellung der in Fig. 2 gezeigten Werkzeugvorrichtung nach einer Drehung um 180°.
Fig. 4 zeigt eine Seitenansicht, in der eine erfindungsgemäße Werkzeugvorrichtung an einer Antriebsvorrichtung mit Hydraulikantrieb montiert ist.

In den Figuren ist eine Ausführungsform einer erfindungsgemäßen Werkzeugvorrichtung 1 zum Anschluss eines Kunststoffrohres oder eines Metall-Kunststoff-Verbundrohres an einen Fitting mit einer Schiebe- oder Presshülse gezeigt. Die erfindungsgemäße Werkzeugvorrichtung 1 umfasst ein Gehäuse 2, eine Aufweitvorrichtung 3 zum Aufweiten der Enden des Kunststoffrohres oder des Metall-Kunststoff-Verbundrohres, eine Schiebevorrichtung 4 zum Aufschieben der Schiebehülse und ein maschinell betreibbares Antriebselement 5. Die Aufweitvorrichtung 3 und die Schiebevorrichtung 4 sind jeweils mit dem Gehäuse 2 verbunden und zum Teil in dem Gehäuse 2 aufgenommen.

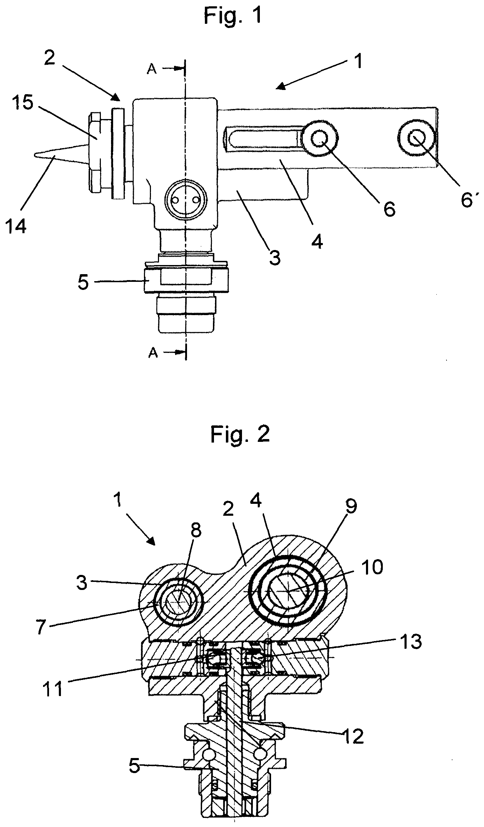

Durch Drehen des Gehäuses 2 relativ zum maschinell betreibbaren Antriebselement 5 ist die erfindungsgemäße Werkzeugvorrichtung zwischen den beiden Betriebsarten umschaltbar: In einer ersten Drehstellung des Gehäuses 2 relativ zum Antriebselement 5, beispielsweise in der in Fig. 1 dargestellten Drehposition, wird die Aufweitvorrichtung 3 angesteuert, während nach einem Drehvorgang des Gehäuses 2 relativ zum Antriebselement 5 um 180° wird die Schiebevorrichtung 4 angesteuert wird. Beide Drehpositionen sind für den Verwender dadurch zu erkennen, dass das Gehäuse 2 im Antriebselement 5 einrastet. In alternativen Ausführungsformen können sich die beiden Drehpositionen, in denen jeweils die Aufweitvorrichtung 3 oder Schiebevorrichtung 4 ansteuerbar sind, über einen Kreissektor von bis zu etwa 60°, vorzugsweise von etwa 30° erstrecken. Damit ist die erfindungsgemäße Werkzeugvorrichtung 1 dann wahlweise zum Betrieb der Aufweitvorrichtung 3 zum Aufweiten der Enden eines Kunststoffrohres oder eines Metall-Kunststoff-Verbundrohres oder zum Betrieb der Schiebevorrichtung 4 zum Aufschieben der Schiebehülse eingerichtet. Zwei Schiebeelemente können jeweils mittel in Fig. 1 dargestellten Befestigungsstiften 6, 6' an der Schiebevorrichtung 4 festgelegt werden. Derartige Schiebeelemente sind beispielsweise aus der DE 20 2008 010 080 U1 bekannt, auf deren Offenbarungsgehalt hinsichtlich Aufbau und Funktionsweise von Schiebeelementen hiermit Bezug genommen wird.

Fig. 2 zeigt eine Schnittdarstellung der in Fig. 1 gezeigten Ausführungsform der erfindungsgemäßen Werkzeugvorrichtung 1 entlang der Linie A-A in Fig. 1 mit Blick in Pfeilrichtung, wobei die Befestigungsstifte 6, 6' entfernt wurden. Darin sind die erste Kolben-Zylindereinheit 7 der Aufweitvorrichtung 3 mit der zugehörigen ersten Kolbenachse 8 sowie eine zweite Kolben-Zylindereinheit 9 der Schiebevorrichtung 4 mit der zugehörigen zweiten Kolbenachse 10 zu erkennen. Die beiden Kolbenachsen 8, 10 verlaufen dabei parallel zueinander, fallen jedoch nicht zusammen. Darüber hinaus sind die beiden Kolben-Zylindereinheit 7, 9 versetzt und zueinander verschoben angeordnet. Die relative Position der Aufweitvorrichtung 3 und der Schiebevorrichtung 4 zueinander ist im Detail in der DE 20 2012 104 763 U1 beschreiben, auf die diesbezüglich hiermit explizit Bezug genommen. Im Gehäuse 2 befindet sich weiter ein erstes Ventil 11, durch das die Aufweitvorrichtung 3 angesteuert werden kann und das in Fig. 2 durch die Exzenterwelle 12 freigegeben ist. Damit kann Hydraulikflüssigkeit durch das erste Ventil 11 in die erste Kolben-Zylindereinheit 7 befördert werden, so dass in dieser Drehposition des Gehäuses 2 relativ zum Antriebselement 5 die Aufweitvorrichtung 3 betrieben werden kann. Im Gegensatz dazu ist das zweite Ventil 13, durch das die Schiebevorrichtung 4 angesteuert werden kann, aufgrund der relativen Position der Exzenterwelle 12 geschlossen. Der Arbeitskolben der Kolben-Zylindereinheit 7 ist an einem Ende aus dem Zylinder herausgeführt und als Spreizdorn 14 ausgebildet (vgl. Fig. 1). Über ein Verbindungselement 15 ist an der Aufweitvorrichtung 3 ein Aufweitkopf bzw. Expansionskopf (nicht dargestellt) anschließbar. Ein derartiger Aufweitkopf ist beispielsweise aus der DE 20 2010 004 948 U1 bekannt, auf deren Offenbarungsgehalt hinsichtlich Aufbau und Funktionsweise des Expansionskopfes hiermit Bezug genommen wird.

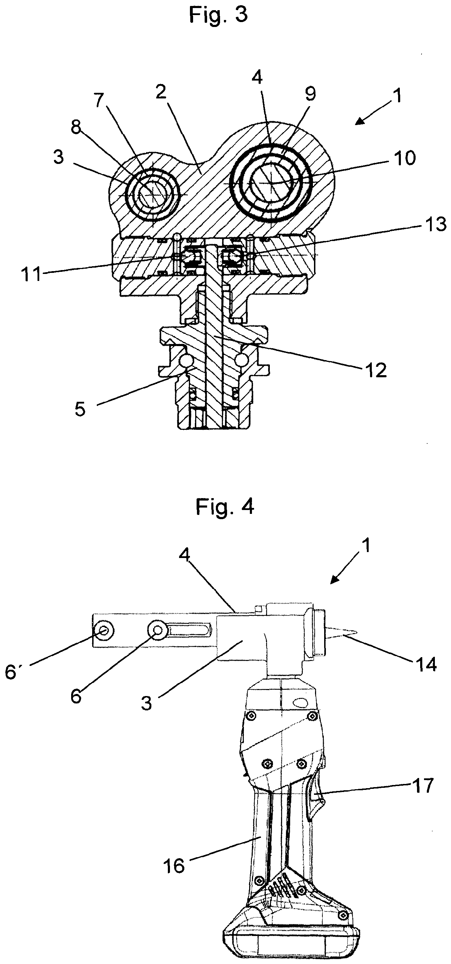

In Fig. 3 ist eine Schnittdarstellung der in Fig. 1 und Fig. 2 gezeigten Ausführungsform der erfindungsgemäßen Werkzeugvorrichtung 1 nach einer Drehung des Gehäuses 2 relativ zum Antriebselement 5 um 180° gezeigt. Dabei ist durch die Position der Exzenterwelle 12 das erste Ventil 11 geschlossen und das zweite Ventil 13 geöffnet, während das zweite Ventil 13 geöffnet ist. Damit kann Hydraulikflüssigkeit durch das zweite Ventil 13 in die zweite Kolben-Zylindereinheit 9 einströmen, so dass in dieser Drehposition des Gehäuses 2 relativ zum Antriebselement 5 die Schiebevorrichtung 4 betrieben werden kann. Beim Betrieb der Schiebevorrichtung 4 treibt der Kolben der Kolben-Zylindereinheit 9 ein bewegliches Schiebeelement in Richtung auf ein weiteres Schiebelement. Die beiden Schiebeelemente sind in Fig. 5 lediglich durch ihre Befestigungsbolzen 6, 6' angedeutet. Das durch den Befestigungsbolzen 6 angedeutete Schiebeelement wird durch den Kolben der zweiten Kolben-Zylindereinheit 9 gegen das durch den Befestigungsbolzen 6' angedeutete Schiebeelement, das positionsstabil an der Schiebevorrichtung 4 gehalten ist, gepresst. Durch die Bewegung des Schiebebeelements gegen das andere Schiebeelement wird eine Schiebehülse über ein durch die Aufweitvorrichtung 3 aufgeweitetes Rohrende eine Kunststoffrohres oder eines Metall-Kunststoff-Verbundrohr, in das ein Fitting eingesetzt ist, unter Bildung einer nicht lösbaren Verbindung geschoben. Der Innendurchmesser der ersten Kolben-Zylindereinheit 7 unterschreitet den Durchmesser der zweiten Kolben-Zylindereinheit 9.

In der ersten Drehstellung des Gehäuses 2 relativ zum Antriebselement 5, in der das erste Ventil 11 geöffnet ist, wird bei Aktivierung einer in ein Hydraulikwerkzeug 16 (Fig. 5) aufgenommenen Hydraulikpumpe durch einen Schalter 17 der Kolben der Aufweitvorrichtung 3 in Richtung des von der Werkzeugvorrichtung 1 weg weisendes Endes der Aufweitvorrichtung 3 vorbewegt. Das dornförmige Ende 14 des Kolbens dringt dann in den Expansionskopf ein, wodurch das auf den Expansionskopf aufgeschobene Rohrende aufgeweitet wird. In dieser Drehstellung des Gehäuses 2 relativ zum Antriebselement 5 zeigt der Spreizdorn 14 der Aufweitvorrichtung 3 in Richtung des Schalters 17. Dadurch ist für den Installateur, der mit der erfindungsgemäßen Werkzeugvorrichtung 1 arbeitet, unmittelbar erkennbar, dass die erfindungsgemäßen Werkzeugvorrichtung 1 auf die Betriebsart "Aufweiten" eingestellt ist, d.h. die Aufweitvorrichtung 3 kann durch Betätigen des Schalters 17 betrieben werden.

In der zweiten Drehstellung des Gehäuses 2 relativ zum Antriebselement 5, in der das zweite Ventil 13 geöffnet ist, wird bei Betätigung des Schalters 17 der Kolben der Schiebevorrichtung 4 bewegt. Dadurch wird eine Schiebehülse, die in über das aufgeweitete Rohrende mit eingeführtem Fitting geschoben wurde, ein aufgeweitetes Rohrende unter Bildung einer unlösbaren Verbindung auf das Rohrende mit eingeführtem Fitting aufgeschoben. In dieser gegenüber der ersten Drehstellung um 180° gedrehten Drehstellung des Gehäuses 2 relativ zum Antriebselement 5 zeigt die Schiebevorrichtung 4 der erfindungsgemäßen Werkzeugvorrichtung 1 in Richtung des Schalters 16. Dadurch ist für den mit der erfindungsgemäßen Werkzeugvorrichtung 1 arbeitenden Installateur wiederum intuitiv erkennbar, dass die erfindungsgemäßen Werkzeugvorrichtung 1 auf die Betriebsart "Verpressen" eingestellt ist, d.h. die Schiebevorrichtung 4 kann durch Betätigen des Schalters 17 betrieben werden.

## Patentansprüche

1. Werkzeugvorrichtung (1) zum Anschluss eines Kunststoffrohres oder eines Metall-Kunststoff-Verbundrohres an einen Fitting mit einer Schiebe- oder Presshülse, umfassend:
- ein Gehäuse (2);
- eine Aufweitvorrichtung (3) zum Aufweiten der Enden des Kunststoffrohres oder des Metall-Kunststoff-Verbundrohres;
- eine Schiebevorrichtung (4) zum Aufschieben der Schiebehülse oder eine Pressvorrichtung zum Aufpressen der Presshülse; und
- ein maschinell betreibbares Antriebselement (5), das umschaltbar zum Antrieb der Aufweitvorrichtung (3) oder zum Antrieb der Schiebe- oder Pressvorrichtung (4) betätigbar ist,
wobei die Aufweitvorrichtung (3) und die Schiebe- oder Pressvorrichtung (4) mit dem Gehäuse (2) verbunden und zumindest teilweise in dem Gehäuse (2) aufgenommen sind,
**dadurch gekennzeichnet, dass**
ein Umschalten des Antriebselement (5) zwischen dem Antrieb der Aufweitvorrichtung (3) und dem Antrieb der Schiebe- oder Pressvorrichtung (4) durch Drehen des Gehäuses (2) relativ zum Antriebselement (5) bewirkbar ist.

2. Werkzeugvorrichtung (1) nach Anspruch 1, **dadurch gekennzeichnet, dass** die Aufweitvorrichtung (3) eine erste Kolben-Zylindereinheit (7) mit einem ersten Arbeitskolben, der über ein erstes Ventil (11) ansteuerbar ist, umfasst und die Schiebe- oder Pressvorrichtung (4) eine zweite Kolben-Zylindereinheit (10) mit einem zweiten Arbeitskolben, der über ein zweites Ventil (13) ansteuerbar ist, umfasst.

3. Werkzeugvorrichtung (1) nach Anspruch 2, **dadurch gekennzeichnet, dass** in einer ersten Drehstellung des Gehäuses (2) relativ zum Antriebselement (5) das erste Ventil (11) geöffnet und das zweite Ventil (13) geschlossen ist und in einer zweiten Drehstellung des Gehäuses (2) relativ zum Antriebselement (5) das erste Ventil (11) geschlossen und das zweite Ventil (13) geöffnet ist.

4. Werkzeugvorrichtung (1) nach Anspruch 3, **dadurch gekennzeichnet, dass** das Öffnen und Schließen des ersten Ventils (11) und des zweiten Ventils (13) über eine gemeinsame Welle (12) erfolgt.

5. Werkzeugvorrichtung (1) nach Anspruch 4, **dadurch gekennzeichnet, dass** die gemeinsame Welle (12) als Exzenterwelle ausgebildet ist.

6. Werkzeugvorrichtung (1) nach Anspruch 4 oder Anspruch 5, **dadurch gekennzeichnet, dass** die gemeinsame Welle (12) bei dem Drehen des Gehäuses (2) relativ zum Antriebselement (5) positionsstabil bleibt.

7. Werkzeugvorrichtung (1) nach einem der Ansprüche 2 - 6, **dadurch gekennzeichnet, dass** eine erste Kolbenachse (8) der ersten Kolben-Zylindereinheit (7) parallel zu einer zweiten Kolbenachse (10) der zweiten Kolben-Zylindereinheit (9) verläuft und die Aufweitvorrichtung (3) und die Schiebe- oder Pressvorrichtung (4) nebeneinander und gegeneinander verschoben angeordnet sind.

8. Werkzeugvorrichtung (1) nach einem der Ansprüche 2 - 7, **dadurch gekennzeichnet, dass** die beiden Kolben-Zylindereinheiten (7, 9) unterschiedliche Zylinderdurchmesser aufweisen.

9. Werkzeugvorrichtung (1) nach Anspruch 8, **dadurch gekennzeichnet, dass** die Kolben-Zylindereinheit (7) der Aufweitvorrichtung (3) einen geringeren Zylinderdurchmesser als die Kolben-Zylindereinheit (9) der Schiebevorrichtung (4) bzw. der Pressvorrichtung aufweist.

10. Verwendung einer Werkzeugvorrichtung (1) nach einem der vorhergehenden Ansprüche zum Anschluss eines Kunststoffrohres oder eines Metall-Kunststoff-Verbundrohres an einen Fitting mit einer Schiebe- oder Presshülse.

## Claims

1. A tool device (1) for connecting a plastic pipe or a metal-plastic composite pipe to a fitting using a sliding sleeve or ferrule, comprising:
- a housing (2);
- a flaring device (3) to flare the ends of the plastic pipe or the metal-plastic composite pipe;
- a sliding device (4) for sliding on the sliding sleeve or a pressing device for pressing on the ferrule; and
- a mechanically operable drive element (5), which is actuatable in a switchable manner to drive the flaring device (3) or to drive the sliding or pressing device (4);
wherein the flaring device (3) and the sliding or pressing device (4) are connected to the housing (2) and are at least partly accommodated in the housing (2),
**characterised in that**
a switching of the drive element (5) between driving the flaring device (3) and driving the sliding or pressing device (4) can be effected by rotating the housing (2) relative to the drive element (5).

2. The tool device (1) according to claim 1, **characterised in that** the flaring device (3) comprises a first piston-cylinder unit (7) with a first working piston, which is controllable via a first valve (11), and the sliding or pressing device (4) comprises a second piston-cylinder unit (10) with a second working piston, which is controllable via a second valve (13).

3. The tool device (1) according to claim 2, **characterised in that**, in a first rotational position of the housing (2) relative to the drive element (5), the first valve (11) is open and the second valve (13) is closed and, in a second rotational position of the housing (2) relative to the drive element (5), the first valve (11) is closed and the second valve (13) is open.

4. The tool device (1) according to claim 3, **characterised in that** the first valve (11) and the second valve (13) are opened and closed via a common shaft (12).

5. The tool device (1) according to claim 4, **characterised in that** the common shaft (12) is configured as an eccentric shaft.

6. The tool device (1) according to claim 4 or claim 5, **characterised in that** the common shaft (12) remains positionally stable relative to the drive element (5) during rotation of the housing (2).

7. The tool device (1) according to one of claims 2 - 6, **characterised in that** a first piston axis (8) of the first piston-cylinder unit (7) runs parallel to a second piston axis (10) of the second piston-cylinder unit (9) and the flaring device (3) and the sliding or pressing device (4) are arranged next to one another and offset relative to one another.

8. The tool device (1) according to one of claims 2 - 7, **characterised in that** the two piston cylinder units (7, 9) have different cylinder diameters.

9. The tool device (1) according to claim 8, **characterised in that** the piston-cylinder unit (7) of the flaring device (3) has a smaller cylinder diameter than the piston-cylinder unit (9) of the sliding device (4) or of the pressing device.

10. Use of a tool device (1) according to one of the preceding claims for connecting a plastic pipe or a metal-plastic composite pipe to a fitting using a sliding sleeve or ferrule.

## Revendications

1. Dispositif d'outillage (1) destiné au raccordement d'un tube en matière plastique ou d'un tube composite en métal-matière plastique à un raccord à l'aide d'une douille coulissante ou une douille de sertissage, comprenant :
- un boîtier (2) ;
- un dispositif d'élargissement (3) destiné à élargir les extrémités du tube en matière plastique ou du tube composite en métal-matière plastique ;
- un dispositif de coulissement (4) destiné à coulisser la douille coulissante ou un dispositif de pression destiné à sertir la douille de sertissage ; et
- un élément d'entraînement (5) pouvant fonctionner mécaniquement, lequel est commutable pour l'entraînement du dispositif d'élargissement (3) ou est actionnable pour l'entraînement du dispositif de coulissement ou sertissage (4) ;
le dispositif d'élargissement (3) et le dispositif de coulissement ou sertissage (4) étant reliés au boîtier (2) et étant logés au moins en partie dans le boîtier (2),
**caractérisé en ce qu'**
une commutation de l'élément d'entraînement (5) entre l'entraînement du dispositif d'élargissement (3) et l'entraînement du dispositif de coulissement ou sertissage (4) est actionnable par rotation du boîtier (2) par rapport à l'élément d'entraînement (5).

2. Dispositif d'outillage (1) selon la revendication 1, **caractérisé en ce que** le dispositif d'élargissement (3) comprend une première unité à piston-cylindre (7) munie d'un premier piston de travail qui est commandable par l'intermédiaire d'une première soupape (11) et **en ce que** le dispositif de coulissement ou sertissage (4) comprend une deuxième unité à piston-cylindre (10) munie d'un deuxième piston de travail qui est commandable par l'intermédiaire d'une deuxième soupape (13).

3. Dispositif d'outillage (1) selon la revendication 2, **caractérisé en ce que** dans une position de rotation du boîtier (2) par rapport à l'élément d'entraînement (5), la première soupape (11) est ouverte et la deuxième soupape (13) est fermée, et **en ce que** dans une deuxième position de rotation du boîtier (2) par rapport à l'élément d'entraînement (5), la première soupape (11) est fermée et la deuxième soupape (13) est ouverte.

4. Dispositif d'outillage (1) selon la revendication 3, **caractérisé en ce que** l'ouverture et la fermeture de la première soupape (11) et de la deuxième soupape (13) sont réalisées par l'intermédiaire d'un arbre commun (12).

5. Dispositif d'outillage (1) selon la revendication 4, **caractérisé en ce que** l'arbre commun (12) est réalisé comme arbre d'excentrique.

6. Dispositif d'outillage (1) selon la revendication 4 ou la revendication 5, **caractérisé en ce que** l'arbre commun (12) reste stable en position lors de la rotation du boîtier (2) par rapport à l'élément d'entraînement (5).

7. Dispositif d'outillage (1) selon l'une quelconque des revendications 2 à 6, **caractérisé en ce qu'**un premier axe de piston (8) de la première unité à piston-cylindre (7) s'étend parallèlement à un deuxième axe de piston (10) de la deuxième unité à piston-cylindre (9), et **en ce que** le dispositif d'élargissement (3) et le dispositif de coulissement ou sertissage (4) sont disposés l'un à côté de l'autre et en étant décalés l'un contre l'autre.

8. Dispositif d'outillage (1) selon l'une quelconque des revendications 2 à 7, **caractérisé en ce que** les deux unités à piston-cylindre (7, 9) présentent différents diamètres de cylindre.

9. Dispositif d'outillage (1) selon la revendication 8, **caractérisé en ce que** l'unité à piston-cylindre (7) du dispositif d'élargissement (3) présente un diamètre de cylindre plus petit que l'unité à piston-cylindre (9) du dispositif de coulissement (4) ou du dispositif de sertissage.

10. Utilisation d'un dispositif d'outillage (1) selon l'une quelconque des revendications précédentes, destiné au raccordement d'un tube en matière plastique ou d'un tube composite en métal-matière plastique à un raccord à l'aide d'une douille coulissante ou d'une douille de sertissage.
